# EUROPÄISCHE PATENTSCHRIFT

(11) **EP 2 620 350 B1**
(45) Veröffentlichungstag und Bekanntmachung des Hinweises auf die Patenterteilung: **04.03.2015**
(21) Anmeldenummer: 12008181.5
(22) Anmeldetag: 07.12.2012
(51) Int. Cl.: B62D 5/00, B62D 6/00, B62D 15/02, B60W 10/18, B60W 10/20

(54) **Verfahren zum Lenken eines Fahrzeugs mittels eines Lenkassistenzsystems**
Method for steering a vehicle by means of a steering assistance system
Procédé destiné à diriger un véhicule au moyen d'un système de direction assistée

(30) Priorität: 28.01.2012 DE 102012001666
(43) Veröffentlichungstag der Anmeldung: 31.07.2013
(73) Patentinhaber: AUDI AG, 85045 Ingolstadt (DE)
(72) Erfinder: Schuberth, Stefan, 85057 Ingolstadt (DE); Breu, Alexander, 93495 Weiding (DE)
(74) Vertreter: Thielmann, Frank

(56) Entgegenhaltungen:
- DE-A1-102004 057 262
- DE-A1-102007 052 258
- JP-A- 2006 103 581
- US-A- 6 070 684
- US-A- 6 082 482
- US-A1- 2008 091 318
- US-A1- 2011 273 310
- US-B1- 6 219 603

## Beschreibung

Die Erfindung betrifft ein Verfahren zum Lenken eines Fahrzeugs mittels eines Lenkassistenzsystems.

Um den Fahrer eines Kraftfahrzeugs zu entlasten wurden bereits unterschiedliche Fahrerassistenzsysteme entwickelt. Spurhaltesysteme weisen einen Umfeldsensor, beispielsweise eine Videokamera, auf und verhindern ein unbeabsichtigtes Überfahren einer relevanten Spurmarkierung, die durch den Sensor erkannt worden ist. Dazu wird durch das Spurhaltesystem ein Lenkmoment zusätzlich zu dem vom Fahrer erzeugten Handmoment aufgeschaltet. Alternativ oder zusätzlich wird der Fahrer vor dem Überfahren einer erkannten Spurmarkierung durch ein Warnsignal gewarnt, das optisch, akustisch oder haptisch erfasst werden kann.

Die Leistung herkömmlicher Spurhaltesysteme wird durch die verwendeten Sensoren begrenzt, daher wird noch kein praxistaugliches Spurhaltesystem angeboten, das permanent aktiv ist und eine automatische Querführung ermöglicht. Zudem wird befürchtet, dass eine permanente automatische Spurführung den Fahrer zu geringerer Aufmerksamkeit auf das Umfeldgeschehen und zu ablenkenden Tätigkeiten verführen würde. Dementsprechend würde sich die Eingriffszeit des Fahrers verlängern, falls eine Übernahme durch einen Lenkeingriff erforderlich wäre, die von dem Spurhaltesystem nicht detektiert wird. In der Praxis würden daher derzeit lediglich "Hands-On-Lösungen" angeboten, die lediglich ein Lenkmoment auf das Lenkrad schalten, wodurch die Aufmerksamkeit des Fahrers auf die Fahrsituation und das Umfeldgeschehen sichergestellt ist.

JP2006103581 ist als nächstliegender Stand der Technik zu sehen und zeigt ein Verfahren zum Lenken eines Fahrzeugs, bei dem das Fahrzeug derart geführt wird, dass ein eingestellter Lenkradwinkel beibehalten wird.

Der Erfindung liegt daher die Aufgabe zugrunde, ein Verfahren zum Lenken eines Fahrzeugs mittels eines Lenkassistenzsystems anzugeben, durch das der Fahrer stärker entlastet wird.

Zur Lösung dieser Aufgabe ist ein Verfahren zum Lenken eines Fahrzeugs mittels eines Lenkassistenzsystems mit den folgenden Schritten vorgesehen:
- Einstellen eines bestimmten Lenkradwinkels durch einen Fahrer;
- Prüfen, ob der eingestellte Lenkradwinkel vom Fahrer während eines festgelegten Zeitraums beibehalten wird;
- Prüfen, ob der Fahrer das Lenkrad losgelassen hat;
- Führen des Fahrzeugs gemäß dem eingestellten Lenkradwinkel, falls der Lenkradwinkel durch den Fahrer während des festgelegten Zeitraums beibehalten wird oder falls der Fahrer das Lenkrad losgelassen hat, andernfalls Abschalten der automatischen Führung durch das Lenkassistenzsystem.

Durch das erfindungsgemäße Verfahren wird ein aktueller, vom Fahrer eingestellter Lenkradwinkel beibehalten, auch beim Befahren von Bodenunebenheiten bleibt der Lenkwinkel konstant. Im unteren Geschwindigkeitsbereich sind häufig nur geringe Lenkbewegungen notwendig, allerdings beeinflussen Bodenunebenheiten den Lenkwinkel. Durch das erfindungsgemäße Verfahren wird somit sichergestellt, dass der aktuelle, vom Fahrer eingestellte Lenkwinkel festgehalten und nicht z. B. durch Bodenunebenheiten verändert wird. Wesentlich ist dabei, dass der Lenkwinkel nicht von Kräften verändert wird, die auf ein Fahrzeugrad einwirken. Andererseits kann der Fahrer jederzeit den Lenkradwinkel verändern und einen neuen Lenkradwinkel einstellen, der dann wieder von dem Lenkassistenzsystem gehalten wird. Das erfindungsgemäße Verfahren wird jedoch nur dann aktiviert, wenn der Fahrer den aktuellen Lenkradwinkel für einen bestimmten Zeitraum beibehalten hat oder alternativ, falls der Fahrer das Lenkrad losgelassen hat. In beiden Fällen kann das erfindungsgemäße Verfahren den Fahrer beim Lenken des Fahrzeugs unterstützen.

Beim Verändern eines eingestellten Lenkradwinkels muss der Fahrer eine kleine Kraft bzw. ein kleines Moment aufbringen, um den aktuell eingestellten Lenkradwinkel zu verändern. Hält der Fahrer das Lenkrad während eines festgelegten Zeitraums in einer Position oder nimmt er die Hände vom Lenkrad, dann wird der aktuell eingestellte Lenkradwinkel von dem Lenkassistenzsystem zum Führen des Fahrzeugs übernommen und kann nur durch den Fahrer übersteuert werden. Dadurch ergibt sich der Vorteil für den Fahrer, dass er seine Hände vom Lenkrad nehmen kann, andererseits wird er nicht dazu verleitet, von einer automatischen Querführung auszugehen, da das erfindungsgemäße Verfahren klar definierte Systemgrenzen besitzt.

Bei dem erfindungsgemäßen Verfahren kann es vorgesehen sein, dass der festgelegte Zeitraum, währenddessen der Lenkradwinkel durch den Fahrer beibehalten wird, ein bis drei Sekunden, vorzugsweise zwei Sekunden dauert. Nach dem Verstreichen dieses festgelegten Zeitraums wird der aktuell eingestellte Lenkradwinkel von dem Lenkassistenzsystem übernommen und für die Querführung des Fahrzeugs verwendet.

Bei dem erfindungsgemäßen Verfahren kann es vorgesehen sein, dass wenigstens ein Umfeldsensor vorgesehen ist, der bei einer erkannten oder drohenden Gefahrensituation ein Signal ausgibt, mit dem der Fahrer zur Veränderung des Lenkradwinkels aufgefordert wird. Der Umfeldsensor kann beispielsweise als Videokamera ausgebildet sein, sofern mittels der Videokamera eine Gefahr, beispielsweise eine drohende Kollision, erkannt wird, wird erfindungsgemäß ein Signal als Warnung für den Fahrer ausgegeben, der daraufhin eine Aktion durchführen kann. Beispielsweise kann er das Fahrzeug abbremsen, um eine Kollision zu vermeiden.

Es liegt auch im Rahmen der Erfindung, dass das Lenkassistenzsystem nur unterhalb einer festgelegten Fahrzeuggeschwindigkeit eingeschaltet wird und beim Überschreiten der festgelegten Fahrzeuggeschwindigkeit ein Spurhalteassistent aktiviert wird. Demnach kommt das erfindungsgemäße Verfahren dann zum Zug, wenn die Geschwindigkeit für einen Spurhalteassistent zu niedrig ist. In diesem Fall wird mittels des Lenkassistenzsystems eine Querführung des Fahrzeugs gewährleistet.

In diesem Zusammenhang kann es bei dem erfindungsgemäßen Verfahren vorgesehen sein, dass beim Unterschreiten der festgelegten Fahrzeuggeschwindigkeit der Spurhalteassistent deaktiviert und das Lenkassistenzsystem aktiviert wird. Der Spurhalteassistent und das Lenkassistenzsystem sind somit wechselweise aktiv, wobei das Lenkassistenzsystem bei niedrigen Fahrzeuggeschwindigkeiten die Querführung des Fahrzeugs übernimmt und der Spurhalteassistent bei höheren Fahrzeuggeschwindigkeiten die Spurführung gewährleistet. Bei einer bestimmten Geschwindigkeitsschwelle findet ein Wechsel zwischen dem Spurhalteassistent und dem Lenkassistenzsystem bzw. umgekehrt statt.

Eine Weiterentwicklung des erfindungsgemäßen Verfahrens sieht vor, dass das Lenkassistenzsystem mittels eines Bedienelements ein- oder ausgeschaltet wird, wobei gegebenenfalls auch der Lenkradwinkel mittels des Bedienelements festgelegt oder verändert wird. Bei dieser Ausgestaltung der Erfindung findet kein automatisches Aus- oder Einschalten des Lenkassistenzsystems statt, stattdessen wird das Lenkassistenzsystem vom Fahrer ein- oder ausgeschaltet. Durch einen Bedienvorgang kann der Fahrer optional auch den Lenkradwinkel steuern, wobei diese Steuermöglichkeit eine Alternative zu dem Drehen des Lenkrads ist. Demnach stehen dem Fahrer mehrere Möglichkeiten der Steuerung zur Verfügung.

Eine weitere Ausgestaltung der Erfindung kann vorsehen, dass das Lenkassistenzsystem nur eingeschaltet wird, wenn ein automatisches Längsführungssystem aktiv ist. Derartige Längsführungssysteme, die auch als ACC (automatic cruise control) bezeichnet werden, entlasten den Fahrer insbesondere im Kolonnenverkehr. Dabei wird das Fahrzeug in Längsrichtung automatisch unter Berücksichtigung anderer Verkehrsteilnehmer gesteuert. Durch das erfindungsgemäße Verfahren kann ein automatisches Längsführungssystem unterstützt werden, indem durch das erfindungsgemäße Verfahren die Quersteuerung des Fahrzeugs übernommen wird.

Um dem Benutzer das Erfassen des aktuellen Zustands zu erleichtern, kann es vorgesehen sein, dass das aktivierte Lenkassistenzsystem mittels einer Anzeige visualisiert wird. Durch diese Anzeige kann der Fahrer auf einen Blick erkennen, ob das Lenkassistenzsystem aktiviert ist oder nicht. Vorzugsweise kann die Anzeige ein Symbol aufweisen, beispielsweise ein Lenkrad, das von einer Kraft "festgehalten" wird. In Abhängigkeit des Zustands kann das auf der Anzeige angezeigte Symbol in unterschiedlichen Farben dargestellt werden. Beispielsweise kann es in einem Standby-Zustand mit der Farbe gelb und im aktivierten Zustand mit der Farbe grün dargestellt werden. Bei einer Übernahmeaufforderung kann die Farbe nach rot wechseln, gegebenenfalls kann zusätzlich ein akustisches Signal ausgegeben werden, um den Fahrer zu veranlassen, den Lenkvorgang zu übernehmen.

Eine weitere Ausgestaltung der Erfindung kann vorsehen, dass das Lenkassistenzsystem das Fahrzeug innerhalb eines festgelegten Winkelbereichs, der vorzugsweise 5° oder 10° umfasst, automatisch führt. Bei dieser Variante ist der Lenkwinkel innerhalb des erwähnten Winkelbereichs veränderbar, im Gegensatz zu einem konstanten Lenkradwinkel.

Daneben betrifft die Erfindung ein Kraftfahrzeug. Das erfindungsgemäße Kraftfahrzeug zeichnet sich dadurch aus, dass es zur Durchführung des beschriebenen Verfahrens ausgebildet ist.

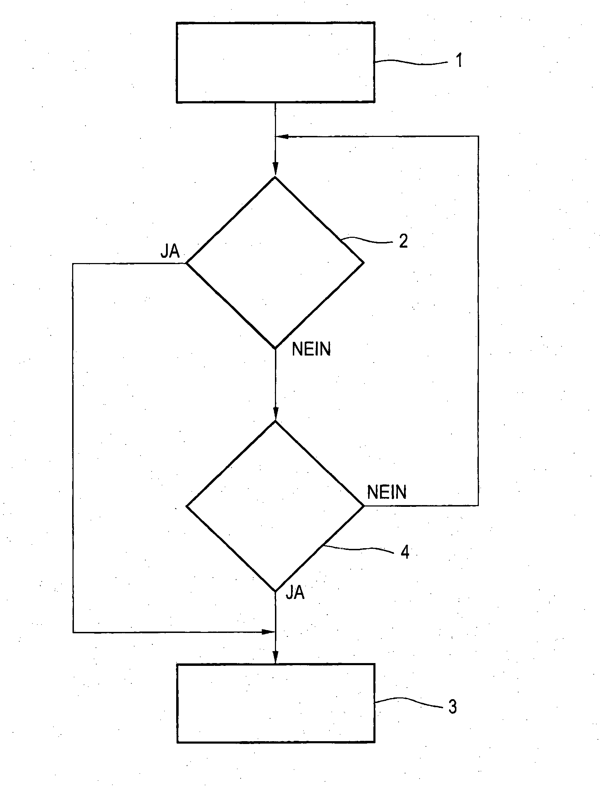

Weitere Vorteile und Einzelheiten der Erfindung werden nachfolgend anhand von Ausführungsbeispielen unter Bezugnahme auf die Zeichnung erläutert. Die Zeichnung ist eine schematische Darstellung und zeigt ein Flussdiagramm des erfindungsgemäßen Verfahrens zum Lenken eines Fahrzeugs mittels eines Lenkassistenzsystems.

Im Schritt 1 des Verfahrens wird ein bestimmter Lenkradwinkel durch einen Fahrer eingestellt. Der Fahrer dreht dabei das Lenkrad in eine gewünschte Winkelposition, um den Fahrweg festzulegen.

Im Schritt 2 wird geprüft, ob der Fahrer das Lenkrad losgelassen hat. Diese Prüfung erfolgt mittels entsprechender Sensoren, die am oder im Lenkrad angeordnet sind. Falls das Ergebnis der Prüfung "Ja" ist, wird zum Schritt 3 verzweigt, d. h. das Fahrzeug wird gemäß dem eingestellten Lenkradwinkel von dem Lenkassistenzsystem gesteuert. Das Lenkassistenzsystem nimmt eine Quersteuerung des Fahrzeugs vor, indem der vom Fahrer eingestellte Lenkradwinkel fixiert wird.

Wenn die Prüfung, ob das Lenkrad losgelassen worden ist, im Schritt 2 andererseits das Ergebnis "Nein" liefert, wird zum Schritt 4 verzweigt, dort wird geprüft, ob ein bestimmter Zeitraum verstrichen ist. Dieser bestimmte Zeitraum beträgt beispielsweise zwei Sekunden. Wenn das Ergebnis dieser Abfrage "Ja" ist, bedeutet das, dass der Fahrer wenigstens zwei Sekunden lang einen bestimmten Lenkradwinkel beibehalten hat. Falls andererseits das Ergebnis dieser Überprüfung "Nein" ist, wird wieder zum Schritt 2 verzweigt und zunächst geprüft, ob der Fahrer das Lenkrad losgelassen hat.

In den Fällen, wenn der Fahrer das Lenkrad festhält, und nicht länger in einer Position verharrt, wird somit nicht zum Schritt 3 verzweigt und das Lenkassistenzsystem wird nicht aktiviert.

Wenn hingegen eine der beiden Bedingungen erfüllt ist, wird zum Schritt 3 verzweigt und das Lenkassistenzsystem lenkt das Fahrzeug gemäß dem eingestellten Lenkradwinkel, der unverändert bleibt.

Durch das Lenkassistenzsystem wird sichergestellt, dass der aktuelle, vom Fahrer gewählte Lenkwinkel festgehalten und nicht z. B. durch Bodenunebenheiten verändert wird. Das Lenkassistenzsystem ist dabei so konfiguriert, dass der Lenkradwinkel nicht von äußeren Kräften, die auf ein Rad einwirken, verändert werden kann. Andererseits kann der Fahrer jederzeit den Lenkradwinkel ändern, um einem bestimmten Fahrbahnverlauf zu folgen. In diesem Fall wird das Verfahren zum automatischen Lenken des Fahrzeugs beendet, erst wenn der Fahrer während des festgelegten Zeitraums keine Änderung des Lenkradwinkels vornimmt, wird das Lenkassistenzsystem wieder aktiviert.

Wenn das Lenkassistenzsystem aktiviert ist, kann der Fahrer die Hände vom Lenkrad nehmen, da das Fahrzeug dann automatisch geführt wird. Andererseits weiß der Fahrer, dass das Lenkassistenzsystem klar definierte Systemgrenzen hat und dass keine automatische Querführung vorhanden ist.

Bei dem Verfahren kann wenigstens ein Umfeldsensor eingesetzt werden, der z. B. als Videokamera ausgebildet ist. Alternativ oder zusätzlich kann der Umfeldsensor z. B. ein Radarsensor oder ein Ultraschallsensor sein, der in der Lage ist, eine drohende Gefahrensituation zu erkennen, beispielsweise eine drohende Kollision mit einem anderen Verkehrsteilsnehmer oder einem ortsfesten Objekt. Dasselbe gilt für das Überfahren einer Fahrbahnmarkierung. Bei einer erkannten Gefahrensituation wird ein Signal ausgegeben, mit dem der Fahrer zur Veränderung des Lenkradwinkels aufgefordert wird. Der Fahrer wird dadurch aufgefordert, die Lenkung des Fahrzeugs wieder zu übernehmen, was durch die Lenkradsensoren erfasst werden kann. Nach der Übernahme durch den Fahrer wird das Lenkassistenzsystem deaktiviert. In diesem Ausführungsbeispiel ist das Signal ein akustisches Signal, dieses kann jedoch durch ein optisches Signal ergänzt werden. Bei einer drohenden Kollision kann durch das Lenkassistenzsystem ein Bremsvorgang in den sicheren Zustand, d. h. bis zum Stillstand, ausgelöst werden. Eine derartige Maßnahme wird vorgenommen, falls das Fahrzeug im Begriff ist, die Fahrspur zu verlassen oder wenn die Gefahr einer Hindernisberührung droht.

Das Lenkassistenzsystem, das einen festen Lenkradwinkel beibehält, ist nur bei geringen Fahrgeschwindigkeiten zweckmäßig, da der Fahrer ansonsten den Lenkradwinkel zu häufig verstellen muss. Bei Fahrzeugen mit einem Spurhalteassistent findet bei einer bestimmten Geschwindigkeit ein Wechsel zwischen dem Lenkassistent und dem Spurhalteassistent statt. Bei geringen Geschwindigkeiten wird der Lenkassistent aktiviert, beim Überschreiten der festgelegten Fahrzeuggeschwindigkeit wird der Spurhalteassistent aktiviert. In diesem Ausführungsbeispiel beträgt die festgelegte Fahrzeuggeschwindigkeit, bei der der Wechsel erfolgt, 40 km/h. Bei anderen Ausführungsbeispielen erfolgt der Wechsel bei 60 km/h. Umgekehrt erfolgt ein Wechsel vom Spurhalteassistent zum Lenkassistenzsystem beim Unterschreiten der festgelegten Fahrzeuggeschwindigkeit.

Mittels eines Bedienelements, das unabhängig von dem Bedienelement für den Spurhalteassistent ist, kann das Lenkassistenzsystem aktiviert bzw. deaktiviert werden. Das Bedienelement ist dabei so ausgebildet, dass an ihm zusätzlich auch der vom Fahrer aufgeprägte Soll-Lenkradwinkel verändert werden kann. Wenn das Bedienelement in eine Richtung betätigt wird, so erhöht sich der Soll-Lenkradwinkel um einen bestimmten Winkelwert. Erfolgt die Bedienung des Bedienelements in entgegengesetzter Richtung, so verändert sich der Soll-Lenkradwinkel um einen festgelegten Winkelwert in die andere Richtung. Dadurch kann der Fahrer eine Verstellung des Soll-Lenkradwinkels neben der direkten Drehung des Lenkrads alternativ auch über das Bedienelement vornehmen.

Daneben ist das Lenkassistenzsystem mit einem Stauassistenten kombiniert. Der Stauassistent, der Spurassistent und das Lenkassistenzsystem sind dabei so miteinander verbunden, dass nur dann von dem Spurhalteassistenten zum Lenkassistenzsystem umgeschaltet wird, wenn der Stauassistent aktiv ist. Wenn der Stauassistent nicht aktiv ist, der Spurhalteassistent jedoch aktiv ist, wird das Lenkassistenzsystem und damit die Querführung unterhalb der festgelegten Geschwindigkeit zum Umschalten von dem Spurhalteassistent zum Lenkassistenzsystem deaktiviert. Erst bei der Aktivierung des Stauassistenten wird das Lenkassistenzsystem wieder aktiviert. Das Aktivieren erfolgt im unteren Geschwindigkeitsbereich durch ein Bedienelement wie einen Schalter, der unabhängig von dem Spurhalteassistent ist. Nach der Deaktivierung des Stauassistenten, beispielsweise durch Betätigen des Gaspedals, wird das Lenkassistenzsystem wieder deaktiviert, nach der Aktivierung des Stauassistenten muss es wieder neu aktiviert werden.

Für das Lenkassistenzsystem ist eine separate Anzeige vorgesehen, die als Symbol ein von einer Kraft festgehaltenes Lenkrad zeigt. Die Anzeige ist ausgeschaltet, wenn das Lenkassistenzsystem deaktiviert ist, in einem Standby-Zustand wird das Symbol in gelb dargestellt, im eingeschalteten Zustand, d. h. wenn das Lenkassistenzsystem aktiv ist, wird das Symbol mit grüner Farbe dargestellt.

Ein weiteres Ausführungsbeispiel sieht vor, dass anstelle eines festen Lenkradswinkels ein festgelegter Winkelbereich von 5° oder 10° vorgesehen ist. Innerhalb dieses Winkelbereichs findet eine automatische Querführung durch den Lenkassistenten statt. Falls ein Lenkradwinkel außerhalb dieses Bereichs benötigt wird, muss der Fahrer die Initialstellung des Lenkrads wieder beeinflussen. Da der Fahrer weiß, dass eine Regelung jenseits des Winkelbereichs nicht möglich ist, kann er dem Lenkassistenzsystem nicht vertrauen und muss die Fahrsituation beobachten. Die Initialstellung des Lenkrads wird durch einen grünen Pfeil in der Anzeige verdeutlicht. Eine Bewegung des Lenkrads wird durch eine entsprechende symbolische Darstellung des Lenkrads visualisiert, so dass die momentane Lenkradposition veranschaulicht wird. Die Grenzen des festgelegten Winkelbereichs werden durch rote Pfeile veranschaulicht, so dass der Fahrer die Systemgrenzen richtig einschätzen kann.

Es ist auch möglich, dass anstelle des festen Lenkradwinkels ein festgelegter Winkelbereich von 10° oder 20° vorgesehen ist, diese Erweiterung kann zeitlich z. B. auf 10 Sekunden oder auf eine definierte Wegstrecke von z. B. 20 m nach dem Aktivieren des Lenkassistenzsystems begrenzt sein. Anschließend wird der erweiterte Bereich über eine Rampe reduziert. Die Erweiterung des Winkelbereichs ist möglich, da der Fahrer nach der Aktivierung des Lenkassistenzsystems üblicherweise aufmerksam ist. Alternativ oder zusätzlich kann die Erweiterung des festgelegten Winkelbereichs im unteren Geschwindigkeitsbereich, z. B. zwischen 10 km/h und 20 km/h vorgenommen werden. Diese Winkelaufweitung wird dem Fahrer im Kombiinstrument optisch dargestellt, beispielsweise mit einem größeren grünen Bereich an einem symbolisch dargestellten Lenkrad.

Alle erläuterten Ausführungsbeispiele und deren technische Merkmale können in unterschiedlichen Kombinationen vorgesehen sein.

## Patentansprüche

1. Verfahren zum Lenken eines Fahrzeugs mittels eines Lenkassistenzsystems, mit den folgenden Schritten:
- Einstellen eines bestimmten Lenkradwinkels durch einen Fahrer;
- Prüfen, ob der eingestellte Lenkradwinkel vom Fahrer während eines festgelegten Zeitraums beibehalten wird;
- Prüfen, ob der Fahrer das Lenkrad losgelassen hat;
- Führen des Fahrzeugs derart, dass der eingestellte Lenkradwinkel beibehalten wird, falls der Lenkradwinkel durch den Fahrer während des festgelegten Zeitraums beibehalten wird oder falls der Fahrer das Lenkrad losgelassen hat, andernfalls Abschalten der automatischen Führung durch das Lenkassistenzsystem.

2. Verfahren nach Anspruch 1,
**dadurch gekennzeichnet,**
**dass** der festgelegte Zeitraum 1 bis 3 Sekunden, vorzugsweise 2 Sekunden dauert.

3. Verfahren nach Anspruch 1 oder 2,
**dadurch gekennzeichnet,**
**dass** wenigstens ein Umfeldsensor vorgesehen ist, der bei einer erkannten oder drohenden Gefahrensituation ein Signal ausgibt, mit dem der Fahrer zur Veränderung des Lenkradwinkels aufgefordert wird.

4. Verfahren nach Anspruch 3,
dass das Signal als optisches und/oder akustisches Signal ausgegeben wird und/oder dass ein Bremsvorgang, gegebenenfalls bis zum Stillstand des Fahrzeugs, ausgelöst wird.

5. Verfahren nach einem der vorangehenden Ansprüche,
**dadurch gekennzeichnet,**
**dass** das Lenkassistenzsystem nur unterhalb einer festgelegten Fahrzeuggeschwindigkeit eingeschaltet wird und beim Überschreiten der festgelegten Fahrzeuggeschwindigkeit ein Spurhalteassistent aktiviert wird.

6. Verfahren nach Anspruch 5,
**dadurch gekennzeichnet,**
**dass** beim Unterschreiten der festgelegten Fahrzeuggeschwindigkeit der Spurhalteassistent deaktiviert und das Lenkassistenzsystem aktiviert wird.

7. Verfahren nach einem der vorangehenden Ansprüche,
**dadurch gekennzeichnet,**
**dass** das Lenkassistenzsystem mittels eines Bedienelements ein- oder ausgeschaltet wird, wobei gegebenenfalls auch der Lenkradwinkel mittels des Bedienelements festgelegt oder verändert wird.

8. Verfahren nach einem der Ansprüche 5 bis 7,
**dadurch gekennzeichnet,**
**dass** das Lenkassistenzsystem nur eingeschaltet wird, wenn ein automatisches Längsführungssystem aktiv ist.

9. Verfahren nach einem der vorangehenden Ansprüche,
**dadurch gekennzeichnet,**
**dass** das aktivierte Lenkassistenzsystem mittels einer Anzeige visualisiert wird.

10. Verfahren nach einem der vorangehenden Ansprüche,
**dadurch gekennzeichnet,**
**dass** das Lenkassistenzsystem das Fahrzeug innerhalb eines festgelegten Winkelbereichs, der vorzugsweise 5° oder 10° umfasst, automatisch führt, wobei der Winkelbereich auf 20° oder 30° erweitert wird und die Erweiterung zeitlich z. B. auf 10 Sekunden und/oder auf eine definierte Wegstrecke von z. B. 20 m begrenzt ist.

11. Kraftfahrzeug,
**dadurch gekennzeichnet,**
**dass** es zur Durchführung des Verfahrens nach einem der Patentansprüche 1 bis 10 ausgebildet ist.

## Claims

1. Method for steering a vehicle by means of an assisted steering system, comprising the following steps:
- the selection of a specific steering wheel angle by a driver;
- checking whether the steering wheel angle selected by the driver is maintained for a fixed period;
- checking whether the driver has let go of the steering wheel;
- guiding the vehicle such that the steering wheel angle selected is maintained if the steering wheel angle is maintained by the driver for the fixed period or if the driver has let go of the steering wheel, otherwise switching off the automatic guidance by the assisted steering system.

2. Method according to claim 1, **characterised in that** the fixed period has a duration of 1 to 3 seconds, preferably 2 seconds.

3. Method according to claim 1 or 2, **characterised in that** at least one environment sensor is provided which, on detecting the occurrence or threat of a dangerous situation, emits a signal instructing the driver to change the steering wheel angle.

4. Method according to claim 3, **characterised in that** the signal is emitted as an optical and/or acoustic signal and/or **in that** a braking process is initiated, optionally until the vehicle comes to a standstill.

5. Method according to one of the preceding claims, **characterised in that** the assisted steering system is only switched on below a specified vehicle speed and when the specified vehicle speed is exceeded a tracking assistant is activated.

6. Method according to claim 5, **characterised in that**, when the vehicle speed falls below the specified vehicle speed, the tracking assistant is deactivated and the assisted steering system is activated.

7. Method according to one of the preceding claims, **characterised in that** the assisted steering system is switched on or off by means of an operating element, while the steering wheel angle may also optionally be set or changed by means of the operating element.

8. Method according to one of claims 5 to 7,
**characterised in that** the assisted steering system is only switched on when an automatic longitudinal guidance system is active.

9. Method according to one of the preceding claims, **characterised in that** the activated assisted steering system is visualised by means of a display.

10. Method according to one of the preceding claims, **characterised in that** the assisted, steering system guides the vehicle automatically within a specified angular range which preferably encompasses 5° or 10°, the angular range being increased to 20° or 30° and the increase being time-limited to 10 seconds, for example, and/or to a defined travel distance of 20 m, for example.

11. Motor vehicle, **characterised in that** it is configured to carry out the method according to one of claims 1 to 10.

## Revendications

1. Procédé servant à diriger un véhicule au moyen d'un système de direction assistée, comprenant les étapes qui suivent consistant à :
- faire régler par un conducteur un angle de braquage déterminé ;
- vérifier si l'angle de braquage réglé est maintenu par le conducteur au cours d'une période de temps spécifiée ;
- vérifier si le conducteur a lâché le volant de direction :
- guider le véhicule de manière à conserver l'angle de braquage réglé dans le cas où l'angle de braquage est maintenu par le conducteur au cours d'une période de temps spécifiée ou dans le cas où le conducteur a lâché le volant de direction, le cas échéant arrêter le guidage automatique par le système de direction assistée.

2. Procédé selon la revendication 1,
**caractérisé en ce**
**que** la période de temps spécifiée présente une durée comprise entre 1 et 3 secondes, de préférence une durée de 2 secondes.

3. Procédé selon la revendication 1 ou 2,
**caractérisé en ce**
**qu'**est prévu au moins un capteur d'environnement, qui émet un signal lorsqu'une situation de danger est identifiée ou est imminente, par lequel le conducteur est invité à modifier l'angle de braquage.

4. Procédé selon la revendication 3,
**caractérisé en ce**
**que** le signal est émis sous la forme d'un signal optique et/ou acoustique, et/ou en ce que la procédure de freinage est déclenchée éventuellement jusqu'à l'arrêt du véhicule.

5. Procédé selon l'une quelconque des revendications précédentes,
**caractérisé en ce**
**que** le système de direction assistée est activé uniquement à une vitesse inférieure à une vitesse du véhicule spécifiée, et en ce que le système d'assistance de maintien de trajectoire est activé lorsque la vitesse du véhicule spécifiée est dépassée.

6. Procédé selon la revendication 5,
**caractérisé en ce**
**que** le système d'assistance de maintien de trajectoire est désactivé lorsque la vitesse est inférieure à la vitesse du véhicule spécifiée, et en ce que le système de direction assistée est activé.

7. Procédé selon l'une quelconque des revendications précédentes,
**caractérisé en ce**
**que** le système de direction assistée est mis en marche ou est arrêté au moyen d'un élément de commande, où l'angle de braquage est également le cas échéant spécifié ou modifié au moyen de l'élément de commande.

8. Procédé selon l'une quelconque des revendications 5 à 7,
**caractérisé en ce**
**que** le système de direction assistée est mis en marche uniquement lorsqu'un système de guidage longitudinal automatique est actif.

9. Procédé selon l'une quelconque des revendications précédentes,
**caractérisé en ce**
**que** le système de direction assistée activé est visualisé au moyen d'un système d'affichage.

10. Procédé selon l'une quelconque des revendications précédentes,
**caractérisé en ce**
**que** le système de direction assistée guide automatiquement le véhicule dans une plage angulaire spécifiée, qui comprend de préférence 5° ou 10°, où la plage angulaire est étendue à 20° ou 30° et l'extension est limitée en termes de temps par exemple à 10 secondes et/ou à une distance parcourue définie de par exemple 20 m.

11. Véhicule automobile,
**caractérisé en ce**
**qu'**il est réalisé en vue de la mise en oeuvre du procédé selon l'une quelconque des revendications 1 à 10.
